# EUROPEAN PATENT APPLICATION

(11) **EP 4 492 276 A1**
(43) Date of publication of application: **15.01.2025**
(21) Application number: 23184644.5
(22) Date of filing: 11.07.2023
(51) Int. Cl.: G06F 30/13, G06F 30/17, G06F 111/20

(54) **LAYOUT CONFIGURATION SYSTEM**

(71) Applicant: The West Retail Group Limited, Barton-upon-Humber North Lincolnshire DN18 5RL (GB)
(72) Inventor: DIXON, Michael, Barton On Humber, DN18 5RX (GB); DAVISON, Connor, Barton On Humber, DN18 5RX (GB); LAVILLE, Conor, Barton On Humber, DN18 5RX (GB)
(74) Representative: Haseltine Lake Kempner LLP

(57) **Abstract**

Embodiments provide layout configuration systems. A computer implemented layout configuration method comprises obtaining layout information for a space (S1010). The method further comprises generating a plurality of layout configurations (S1020), wherein the generation of the plurality of layout configurations comprises: automatically determining key object positioning within the space (S1021), automatically configuring key objects using layout information (S1022), automatically determining regular object positioning using key object positioning and configuration and layout information (S1023), and automatically configuring regular objects using layout information and regular object positioning (S1024). The method further comprises selecting one or more of the plurality of layout configurations (S1030), and outputting the selected one or more layout configurations (S1040).

## Description

Embodiments of the present disclosure relate to layout configuration systems, in particular layout configuration systems for automatically generating plural layout configurations for objects in spaces. Further embodiments relate to associated computer systems and software.

### Background

The process of designing the interior layout and configuration of a space, such as a room of a building, may include making selections of several different types of component or element, often from a great number of options, along with deciding how to arrange those components relative to one another. Typically there are numerous configuration requirements and/or restrictions to be taken into account. Accordingly the process of obtaining a layout configuration can be onerous.

In some scenarios, a user desiring to obtain a layout configuration may prefer to avoid part or all of the process of generating the layout configuration. Taking the example where the layout relates to one or more rooms, a user may know which items are to be included in the room(s), and/or may also know the approximate locations within the room(s) for one or more of the items. Alternatively, a user may have only the layout information and an intended purpose (kitchen, storage area for factory, bathroom, and so on) for a room, or even only the intended purpose. In order to complete the layout configuration using existing systems, it is necessary for a user to specify in detail the position and configuration of each item to be included in the room(s). In this context, the term "layout" is used to refer to the physical arrangement of objects, while the term "configuration" is used to refer to the selection of properties of an object. Taking the example of a cupboard, layout options may determine where the cupboard is to be positioned, while configuration options may determine what colour the cupboard should be, what type of handle to use, what material to form the cupboard from, how many drawers/doors the cupboard should have, and so on. The above example refers to the layout configuration of a room (such as a kitchen or bathroom) in a building; it can easily be envisaged how equivalent considerations may be present for another interior or exterior space.

Generating a layout configuration can be a time intensive and arduous process for users. It is therefore desirable to reduce the amount of user input required to complete a layout configuration.

### Summary

A computer implemented layout configuration method in accordance with an embodiment comprises obtaining layout information for a space. The method further comprises generating a plurality of layout configurations by: automatically determining key object positioning within the space, automatically configuring key objects using the layout information, automatically determining regular object positioning using key object positioning and configuration and layout information, and automatically configuring regular objects using layout information and regular object positioning. The method further comprises selecting one or more of the plurality of layout configurations, and outputting the selected one or more layout configurations.

A layout configuration apparatus in accordance with an embodiment comprises processing circuitry and a memory containing instructions executable by the processing circuitry. The layout configuration apparatus is configured to obtain layout information for a space. The layout configuration apparatus is further configured to automatically generate a plurality of layout configurations, by: automatically determining key object positioning within the space, automatically configuring key objects using the layout information, automatically determining regular object positioning using key object positioning and configuration and layout information, and automatically configuring regular objects using layout information and regular object positioning. The layout configuration apparatus is also configured to select one or more of the plurality of layout configurations, and to output the selected one or more layout configurations.

### Brief Description Of Figures

Reference will now be made, by way of example only, to the accompanying drawings, in which:
Figure 1 is a flowchart of a method that may be performed by systems in accordance with embodiments;
Figure 2A is a schematic diagram of a layout configuration apparatus in accordance with embodiments;
Figure 2B is a schematic diagram of a further layout configuration apparatus in accordance with embodiments;
Figure 3A is a schematic diagram showing an example of layout information for a space, in accordance with embodiments;
Figure 3B is a schematic diagram showing examples of four different layout configuration types for a given space, in accordance with embodiments;
Figure 4A and Figure 4B are plan views of a corner unit positioning in accordance with embodiments;
Figure 4C is a partial layout configuration in accordance with embodiments;
Figure 5 is a plan view of part of a layout configuration that is being generated in accordance with embodiments;
Figure 6 is a plan view of an example of wall unit positioning in accordance with embodiments;
Figure 7 is a plan view of a layout configuration in accordance with embodiments;
Figure 8A and Figure 8B are plan views showing preferred worksurface layout selection in accordance with embodiments; and
Figure 9 is a schematic diagram of a layout configuration for the space of Figure 3A, in accordance with embodiments.

### Detailed Description

For the purpose of explanation, details are set forth in the following description in order to provide a thorough understanding of the embodiments disclosed. It will be apparent, however, to those skilled in the art that the embodiments may be implemented without these specific details or with an equivalent arrangement.

Embodiments provide systems for reducing the amount of human input required to generate a layout configuration. The generated layouts may be viewed and/or amended by users, and may also be output and used in the assembly of materials to fabricate a layout. Embodiments may result in layout configurations that efficiently utilise raw materials (such as wood and stone, for example).

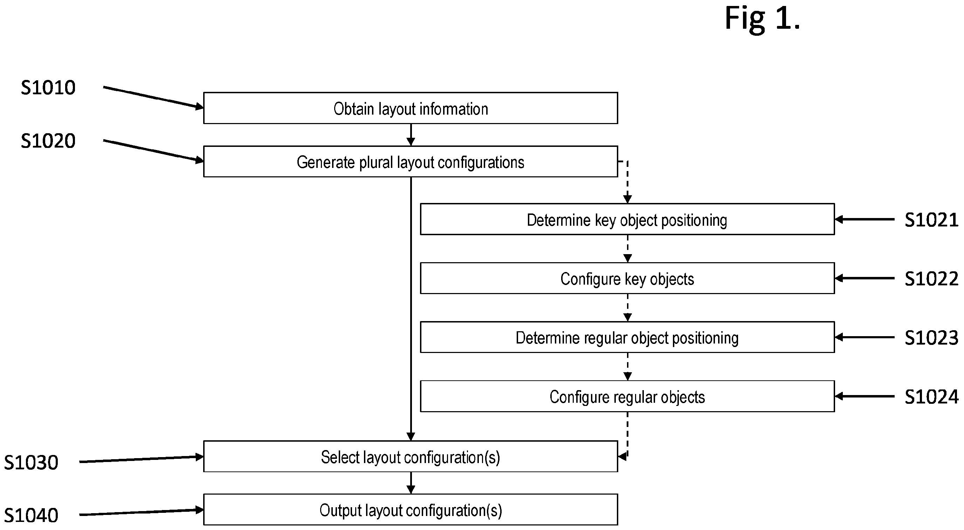

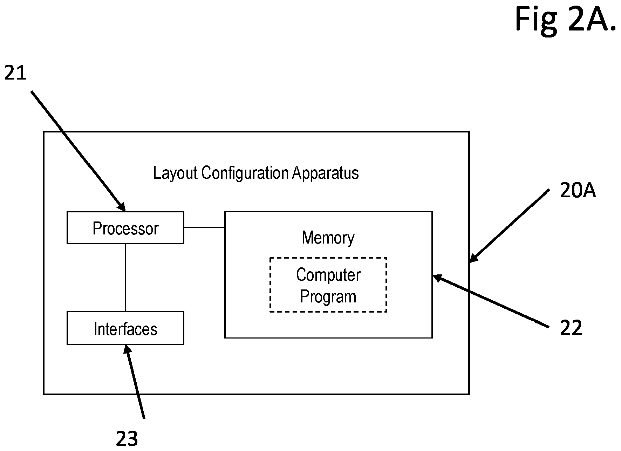

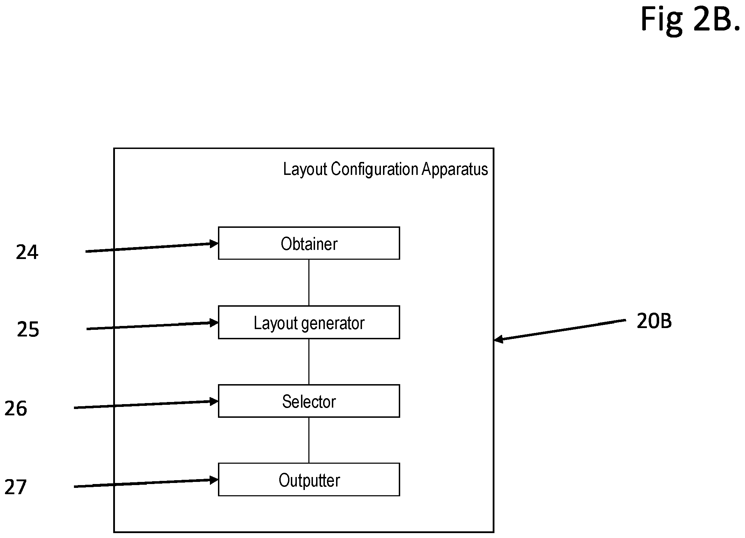

**Figure 1** is a flowchart of a method that may be performed in accordance with embodiments. The method may be performed by any suitable apparatus. Examples of suitable apparatuses for performing the method shown in Figure 1 are the layout configuration apparatuses 20A and 20B shown schematically in **Figure 2A** and **Figure 2B** respectively; layout configuration apparatuses 20A and 20B may collectively be referred to using reference sign 20. The layout configuration apparatus 20A as shown in Figure 2A may execute steps of the method in accordance with a computer program stored in a memory 22, executed by a processor 21 in conjunction with one or more interfaces 23, as discussed in greater detail below. The layout configuration apparatus 20B may execute steps of the method using obtainer 24, layout generator 25, selector 26, and outputter 27. In some embodiments, some or all of the obtainer 24, layout generator 25, selector 26, and outputter 27 may be modules within a computer program. The layout configuration apparatuses 20A and 20B may also be configured to execute the steps of other embodiments, as discussed in detail below. Further, unless explicitly stated otherwise, the steps of the method are not necessarily performed in the order discussed herein.

As shown in step S1010 of Figure 1, methods in accordance with embodiments comprise obtaining layout information for a space. At a basic level, the layout information may comprise geometry information for the space. Taking the example where the space for which a layout configuration is to be generated is at least a portion of the interior of a building (that is, at least a part of a room), the geometry information may comprise the interior dimensions of the room (height, width, breadth), the location of any protrusions into the room volume such as pillars or restricted height sections of ceiling, locations of any windows or doors, locations of service connections (such as water connections or gas connections) and so on. In some embodiments, the layout information may comprise additional information, such as positioning information for existing key objects to be retained. Returning to the example in which the space for which a layout configuration is to be generated is at least a portion of the interior of a building, the existing key objects to be retained may include items of furniture, appliances, and so on. By way of example, where the space is a kitchen an existing hob or range cooker may be considered an existing key object to be retained.

In some embodiments, the layout information may be obtained via a user simply inputting this information using a suitable input device, such as a keyboard, touchscreen, and so on. Alternatively or additionally, layout information may be automatically input by the scanning of a space (such as a room) using an automated 3D scanning system; such input devices are typically able to obtain room geometry information (for example, using laser scanning) with little or no user input required, and automatically output this geometry information to systems in accordance with embodiments as layout information. Alternatively or additionally, layout information may be obtained from an existing layout plan where such a plan is available. Where layout information is to be obtained from an existing layout plan, a user generated plan may comprise geometry information for a space and information on existing objects in the space, such as user positioned unit information (where the existing plan may be provided as separate files which may be combined to obtain the geometry information and user positioned unit information). Where an existing layout plan comprises existing object information and the existing objects are not to be retained in the layout configuration, this information may be discarded, such that only the geometry information is extracted from the existing layout plan for use in the layout configuration. Alternatively, where the existing objects are key objects to be retained in the layout configuration, position information for these key objects may be obtained as part of the layout information. The key object positioning information may be obtained from an existing layout plan (as discussed above), or may be input by a user with a suitable input device. In some embodiments combinations for the above means for obtaining layout information may be used, for example, a scanning system may be used to obtain geometry information for a space, which may then be augmented with locations of service connections input by a user.

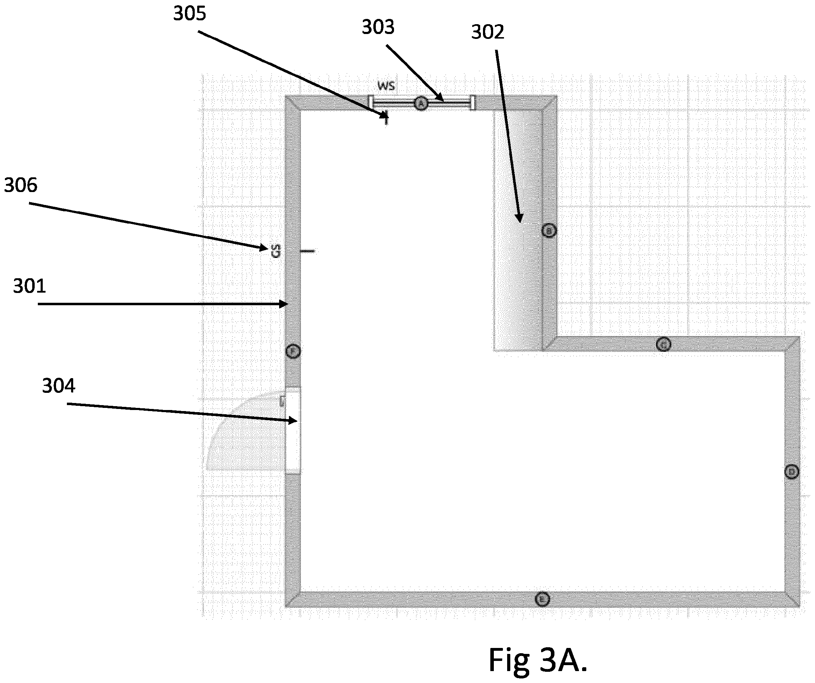

**Figure 3A** is a schematic diagram showing an example of layout information which may be obtained, in accordance with embodiments. In the example shown in Figure 3A, the layout information relates to a room of a building, specifically a room that is intended to be used as a kitchen. The layout information in this example includes geometry information for the room, such as the interior dimensions of the room (as dictated by the relative positions and orientations of the walls 301). Also included is information on a protrusion into the room; a restricted height section of ceiling 302 (that is, a section of ceiling that is closer to the ground than . The layout information includes the locations of windows 303 and doors 304; the room to which the layout information in this example relates includes one window 303 and one door 304. Two service connections are also shown: a water connection 305 and a gas connection 306, both examples of service connections.

The layout information may be obtained, for example, by the processor 21 of layout configuration apparatus 20A running a program stored on the memory 23 and utilising the interfaces 22 (which may include one or more user interfaces and/or interfaces with storage media), or may be performed by the obtainer 24 of layout configuration apparatus 20B.

As shown in step S1020 of Figure 1, the method further comprises automatically generating a plurality of layout configurations. The step of generating plural layout configurations can be divided into several substeps, shown as steps S1021, S1022, S1023 and S1024 in Figure 1. The substeps may each be applied in turn to generate a layout configuration, accordingly the generation of plural layout configurations may involve one or more of the substeps being applied several times (concurrently or sequentially) to generate different layout configurations. The substeps are discussed in turn below.

The first of the substeps is determining key object positioning within the space (shown as S1021 in Figure 1). The term "automatically" is used here and elsewhere to indicate that the relevant substep (here the substep of determining key object positioning within the space) may be performed by computer implementation without the requirement for human input, although human input may be provided if desired. The key objects are objects which are required to be, or preferably are, positioned in a particular location (or in one of a plurality of particular locations) within a space. The exact nature of the key objects is dependent on the nature of the space to which the layout configuration relates; taking the example in which the space is at least a portion of the interior of a building, the key objects may comprise interior fittings of the building that are required to be positioned in a particular location. Continuing with the above example, where the space is the interior of an office building floor, an internal air conditioning unit may be required to be positioned next to the inflow of an air conditioning duct. As an alternative example, where the space is a kitchen, the key objects may comprise corner units (which may be positioned in the corners of a room), gas hobs (which may be positioned proximate to a gas connection), sinks (which may be positioned near water connections), and so on.

In some examples it may not be necessary for key objects to be positioned in particular locations, but this may be preferable for efficiency. By way of example, where the space is a kitchen and the key object is a gas hob (which may be positioned proximate to a gas connection), an existing gas connection may be rerouted to an alternative location but doing so would typically require substantial work, so it may be preferable for the gas hob to be positioned proximate to an existing gas connection location. Objects to be positioned that are not key objects may be referred to as regular objects. Typically regular objects are those that are not required or preferred to be positioned in particular locations. As will be appreciated by those skilled in the art, the nature of regular objects in a given layout configuration is largely determined by the space for which a layout configuration is to be generated. Where the space is a room, the regular objects may therefore be interior fittings that are not required to be located in any particular position. Returning to the example where the space is the interior of an office building floor, the regular objects may comprise desk units and chairs, for example. As an alternative example, where the space is a kitchen, the regular objects may comprise floor mounted cupboards and shelves (also referred to as base units, which may be defined as a half height unit which typically rests on a floor and has a top surface at worksurface level, so approximately 1m from the ground), wall mounted cupboards and shelves (also referred to as wall units, which may be defined as a unit which is located on a wall, typically above worksurface level, wherein the wall unit is typically half height or less and does not contact the floor), full height cupboards and shelves (also referred to as tower units, which may be defined as a full height unit which typically rests on the floor and has a top surface approximately level with the top surface of proximate wall units), and so on.

The key object positioning may be determined, for example, by the processor 21 of layout configuration apparatus 20A running a program stored on the memory 23 and utilising the interfaces 22 (which may include one or more user interfaces and/or interfaces with storage media), or may be performed by the layout generator 25 of layout configuration apparatus 20B.

In some embodiments, a plurality of key object positioning rules may be applied when determining the key object positioning within the space. The key object positioning rules used are dependent on various factors, including the nature of the space for which a layout configuration is to be generated, the key object or objects to be positioned, the information obtained during the layout information obtaining step, and so on. In some embodiments, the key object positioning rules may receive as an input a user input list of key objects to be included, wherein the user input list may include approximate positioning information. In alternative embodiments, the key object positioning rules may comprise rules for automatically determining what key objects to position within the space. Both of these alternative may be present in the same embodiment: if such an embodiment receives a user input list of key objects, this list may be used to determine what key objects to position; alternatively, if such an embodiment does not receive a user input list, the key objects to position may be automatically determined as part of the key object positioning rules. Similarly: if user input approximate positioning information is received, this may be used when determining the positions of key objects; alternatively if user input approximate positioning information is not received, the positioning of the key objects may be determined without this information.

Further inputs may also be received by the key object positioning rules in some embodiments, wherein said further inputs may be obtained as part of the layout information. By way of example and as discussed above, where the space is a kitchen, the layout information may comprise locations of service connections (such as water connections or gas connections); where available this information may be received as an input by the key object positioning rules and used in the positioning of key objects, that is, a gas hob (a key object in this example) may be positioned proximate to the gas connection and a sink and/or dishwasher (both key objects) may be positioned proximate to the water connection. The further inputs may include operational requirements and/or safety requirements; continuing with the example of a gas hob, the further inputs may comprise exclusion zone information relating to the hob indicating that a given space around a hob should be left clear to reduce the risk of fires.

In some embodiments, a layout score may be determined for one or more (potentially all) of the generated layout configurations. The determined layout scores may subsequently be used in the selection of one or more of the plural layout configurations, as discussed below with reference to step S1030 of Figure 1. Where layout scores are determined for one or more of the generated layout configurations, the object positioning rules may also be used in the score determining process. Layout configurations which more closely confirm with object positioning rules, and/or that conform with more object positioning rules where multiple rules are considered, may be scored more favourably than other layout configurations that are less compliant with object positioning rules (and/or compliant with fewer rules).

The term "favoured" when referring to a given layout configuration is used to indicate that the given layout configuration is more likely to be selected for display/output than a less favoured layout configuration. The favouring of layout configurations may be implemented using a numerical scoring system; in embodiments configured such that the output layout configuration(s) are typically those with the highest scores, the more favoured layout configurations would be allocated higher scores than the less favoured layout configurations. Alternatively, in embodiments configured such that the output layout configuration(s) are typically those with the lowest scores, the more favoured layout configurations would be allocated lower scores than the less favoured layout configurations.

Continuing with embodiments in which the space is a room of a building, specifically a kitchen, the key objects may comprise one or more of a cooker, a dishwasher, a refrigerator, a hob unit, a sink and a corner unit. Where this is the case, object positioning rules for these key objects may be used to position the key object(s) in layout configurations, and also to score those layout configurations. Further, where spaces (kitchens or other spaces) may include more than one key object, layout configurations including larger varieties of key objects may be favoured in the layout scoring. Some examples of object positioning rules for embodiments in which the space is a kitchen are discussed below.

In some embodiments, in which the space is a kitchen or other room having a water supply (such as a bathroom), there may be an object positioning rule favouring layout configurations having at least one sink, optionally favouring layout configurations having plural sinks. More specific layout configuration rules may also be included, such as one or more of: a rule favouring layout configurations having a sink positioned adjacent to a water supply; a rule favouring layout configurations having a sink positioned proximate to a window; a rule favouring layout configurations having a sink positioned proximate to a drainage point; a rule favouring layout configurations having a sink positioned in a base unit adjacent to at least two further base units (that is, not in a base unit located at the end of a run of base units); and a rule favouring layout configurations having a sink positioned in an island (optionally where positioning in the centre of the island unit is more favoured).

Where there are plural object positioning rules relating to a key object type, such as a sink, the rules may be allocated equal weighting to one another (such that the rules have the same bearing on the overall favourability of a layout configuration, for example, the overall score allocated to a layout configuration). Alternatively, the object positioning rules may be allocated different weightings to one another, meaning that some object positioning rules would have a greater importance or bearing on the overall favourability of a layout configuration than others. As an example of an embodiment in which object positioning rules are allocated different weightings, the object positioning rules for sink positioning listed above may be weighted in the order listed, such that the proximity of the sink to a water supply has the greatest impact on the layout configuration favourability and the positioning of the sink in an island has the least impact on the layout configuration favourability.

In some embodiments in which the space is a kitchen, there may be an object positioning rule favouring layout configurations having at least one cooker. More specific layout configuration rules may also be included, such as one or more of: a rule favouring layout configurations having a cooker positioned adjacent to a gas supply; a rule favouring layout configurations having a cooker positioned between two windows, optionally wherein positioning equidistant to the two windows is more favoured; a rule favouring layout configurations having a cooker positioned in a base unit adjacent to at least two further base units (that is, not in a base unit located at the end of a run of base units); and a rule favouring layout configurations having a cooker positioned in an island (optionally where positioning in the centre of the island unit is more favoured). As discussed above in the context of plural object positioning rules relating to sinks, the rules may be allocated equal weighting to one another, or may be allocated different weightings to one another. Where different weightings are used, the object positioning rules for cooker positioning listed above may be weighted in the order listed, such that the proximity of the cooker to a gas supply has the greatest impact on the layout configuration favourability and the positioning of the cooker in an island has the least impact on the layout configuration favourability.

In some embodiments in which the space is a kitchen, there may be an object positioning rule favouring layout configurations having at least one dishwasher. More specific layout configuration rules may also be included, such as one or more of: a rule favouring layout configurations having a dishwasher positioned adjacent to a sink (where a sink is also present); and a rule favouring layout configurations having a dishwasher positioned in a base unit, optionally wherein larger base units are more favoured. As discussed above, the rules may be allocated equal weighting to one another, or may be allocated different weightings to one another. Where different weightings are used, the object positioning rules for dishwasher positioning listed above may be weighted in the order listed, such that the proximity of the dishwasher to a sink has the greatest impact on the layout configuration favourability and the positioning of the dishwasher in a base unit (more favourably a larger base unit) has the least impact on the layout configuration favourability.

In some in which the space is a kitchen or other space utilising cold storage (such as a laboratory), there may be an object positioning rule favouring layout configurations having at least one refrigerator. More specific layout configuration rules may also be included, such as a rule favouring layout configurations having a refrigerator positioned in a tower unit.

As discussed above, where layout scores are determined for one or more of the generated layout configurations, the object positioning rules may also be used in the score determining process. The determined layout scores may subsequently be used in the selection of one or more of the plural layout configurations, as shown in step S1030 of Figure 1. Where the object positioning rules are used in this way, it is possible that where more than one of the plural layout configurations are selected, the selected layout configurations may be similar to one another. Accordingly, in some embodiments, the selection of one or more of the plural layout configurations may additionally or alternatively be based on other factors. In some embodiments, layout configurations including larger varieties of key objects and/or regular objects may be favoured in the scoring over layout configurations having smaller varieties of key objects and/or regular objects. Additionally or alternatively, in some embodiments a factor in determining the scoring of a given layout configuration among a plurality of generated layout configurations may be the similarity of the given layout configuration to other layout configurations among the plurality of generated layout configurations. Further, where more than one of the plurality of layout configurations is selected, layout configurations that are dissimilar to one another may be favoured in the layout scoring.

The level of similarity between different layout configurations may be determined in any suitable way. By way of example, a sum of distances between the positioning of key objects in any two layouts may be used to provide a level of similarity, where a key object that is absent from one of the two layouts being evaluated may be allocated a fixed maximum "distance". Where there are plural layouts, the respective scores may be given as the average of the pairwise distances for each of the potential combinations of layout configurations.

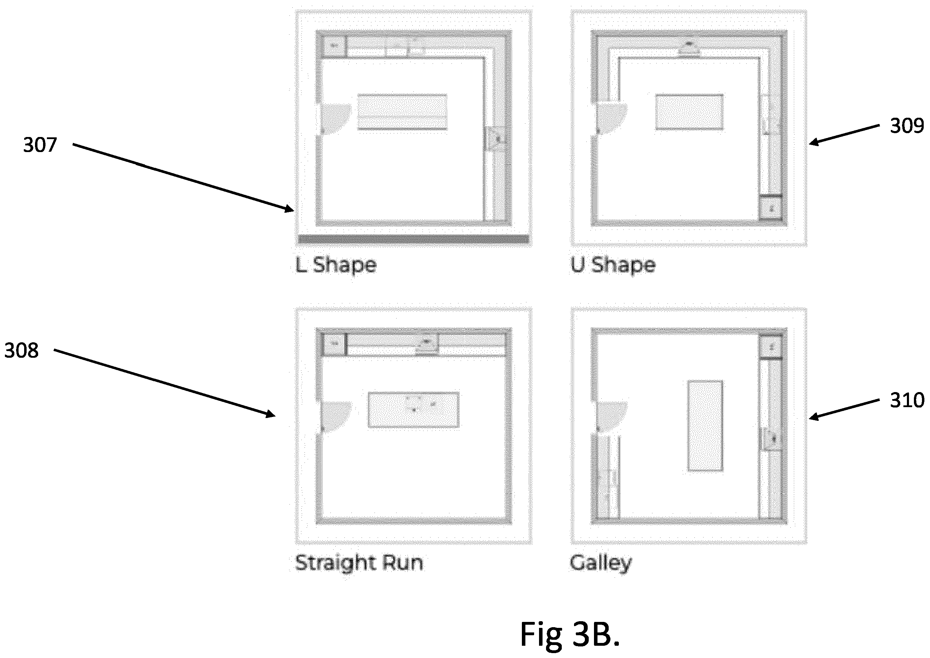

In some embodiments, layout configurations may be classified into one of two or more types, and the level of dissimilarity between two given layout configurations may be determined to be higher when the two given layout configurations are of different types. The nature of the types into which layout configurations may be classified is dependent on the spaces to which the layout configurations relate; generally the types relate to the general groupings of key objects and regular objects within the space. An example of the classification of layout configurations into types, in accordance with embodiments, is illustrated by **Figure 3B**; in this example the layout configurations are for a kitchen. As discussed above, the types differ in the general groupings of the key and regular objects. The example layout configuration types shown in Figure 3B are a L-shaped configuration 307, a straight run configuration 308, a U-shaped configuration 309 and a galley configuration 310. As explained above, two layout configurations that are of different types to one another may be considered more dissimilar to one another than two layout configurations that are of the same type, all else being equal. Accordingly, consider two pairs of layout configurations A-B and A-C, (and assuming for the sake of explanation that the two pairs are otherwise considered to be of an equal level of similarity). If layout configuration A is an L shape configuration, layout configuration B is a galley configuration, and layout configuration C is an L shape configuration, then A-B would be considered to have a higher level of dissimilarity than A-C.

When the key object positioning has been determined, the method may then continue with the automatic determination of key object configuration, using the layout information, as shown in substep S1022 of Figure 1. The configurations of key objects may comprise determining a specific model of a key object type to be used, taking into consideration the layout information and potentially with reference to other selection factors (such as acceptable price ranges, colour choices, and so on). With reference to the example discussed above wherein the space is a kitchen and wherein the key object to be configured is a sink unit, the key object configuration may comprise automatically determining a model of sink to include in the layout configuration, taking into account the space allocated for the sink unit (depth, width, etc.) and also potentially with reference to the colour of the sink unit, whether the sink unit includes a single or double sink, and so on. The key object configuration may further comprise determining other properties of the key object; continuing with the example of a sink unit this may include determining a number of drawers or doors to be included in a sink unit based on a height of the unit. Similarly, the configuration of key units such as hob units, appliances and corner units may also comprise the selection of specific models of these key unit types, as well as determining other properties such as numbers of doors, drawers, opening directions of doors where applicable, and so on. The key objects may be configured, for example, by the processor 21 of layout configuration apparatus 20A running a program stored on the memory 23 and utilising the interfaces 22 (which may include one or more user interfaces and/or interfaces with storage media), or may be performed by the layout generator 25 of layout configuration apparatus 20B.

In some embodiments where the layout configuration information is for a kitchen, the steps of determining key object positioning and configuring key objects may further comprise positioning and configuring corner units. Corner units are units that abut a vertex at the junction between two walls; the corner units are therefore considered to be key objects as their location is dictated by the layout information of the kitchen (the position of the corner). The position and configuration of the corner units may also take into account any approximate positioning information for regular objects in the vicinity of the corner units, such as base units, wall units, tower units or island units, if such approximate positioning information has been obtained as discussed above. The positioning of regular objects is discussed in more detail below with reference to step S1023 of Figure 1.

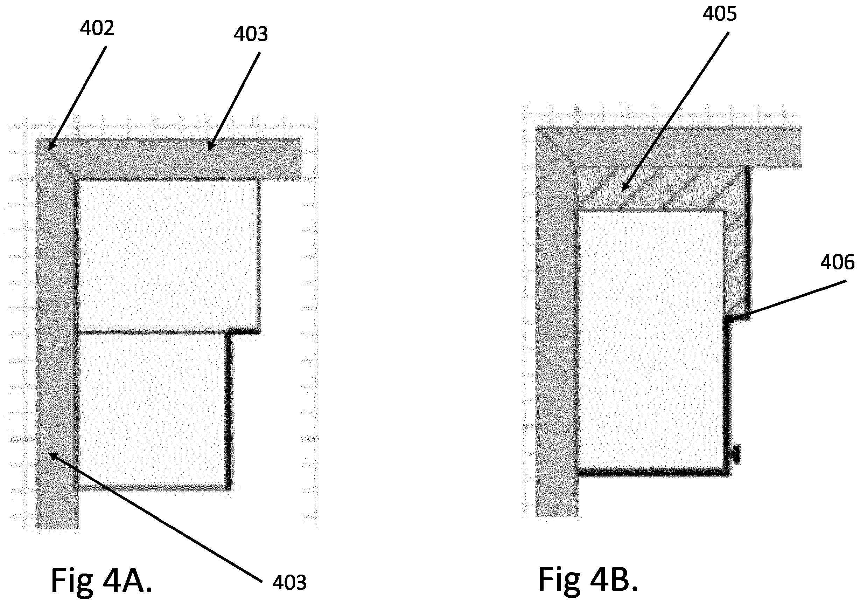

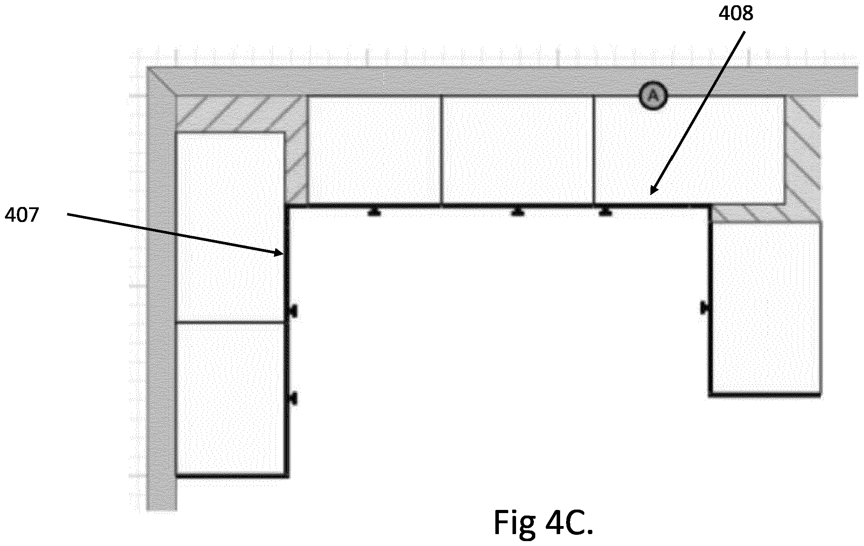

**Figure 4A** and **Figure 4B** are plan views showing how a corner unit may be positioned and configured. Figure 4A shows the approximate position of the corner unit 401 against the vertex 402 between two walls 403. Corner units may be used where two runs of units meet, wherein the runs are not parallel to one another (typically the two runs may be perpendicular to one another). The position of the corner units may therefore be dictated at least in part by room geometry and surrounding units. The configuration of the corner units may make reference to all corner units in a room, such that the corner unit in the most confined position is as accessible as possible. In the example shown in Figure 4B, this results in the door opening towards the void space 405 (the hinge of the door of the corner unit is located at point 406). Once this orientation is set, it may then be matched for other corner units in the layout, resulting in a layout configuration as shown (in part) in **Figure 4C****.** As can be seen in Figure 4C, the opening orientation of the door 407 is the same as that of door 408. In some embodiments where wall corner units are to be located above base corner units, the wall corner units may be configured to match the corresponding base corner units, that is, to have doors opening in the same direction.

When any key objects to be included in a layout configuration have been positioned and configured, regular objects may then be automatically positioned (as shown in substep S1023 of Figure 1) and automatically configured (as shown in substep S1024 of Figure 1). The regular objects may be positioned and configured, for example, by the processor 21 of layout configuration apparatus 20A running a program stored on the memory 23 and utilising the interfaces 22 (which may include one or more user interfaces and/or interfaces with storage media), or may be positioned and configured by the layout generator 25 of layout configuration apparatus 20B.

The term regular object may be used to refer to objects that are not required to be positioned in any specific location, and as such are not as constrained as key objects. As will be appreciated by those skilled in the art, the nature of regular objects is largely determined by the space for which a layout configuration is to be generated. The regular objects may therefore be interior fittings that are not required to be located in any particular position. Returning to the example where the space is the interior of an office building floor, the regular objects may comprise desk units and chairs, for example. As an alternative example, where the space is a kitchen, the regular objects may comprise floor mounted cupboards and shelves (also referred to as base units), wall mounted cupboards and shelves (also referred to as wall units), full height cupboards and shelves (also referred to as tower units), island units (essentially base units that do not directly abut a wall) and so on.

As with the key object positioning, the regular object positioning may comprise applying a series of rules, that is, regular object positioning rules. As discussed above, these (regular) object positioning rules may also be used in the process of scoring layout configurations, in embodiments where layout configuration scoring is used. The automatic positioning of the regular objects takes into account the positioning and configuration of the key objects. Further, although the regular objects may be positioned in isolation from one another, in many embodiments the regular objects may typically be located in close proximity to one another; where this is the case, the rules for positioning of the regular objects may take into account the positioning of other regular objects. Other factors, such as the potential dimensions of the regular objects, may also be taken into consideration.

In some embodiments in which the space is a kitchen or other room having fitted units (such as wall units, base units and/or tower units), there may be object positioning rules based on the configuration of the fitted units. The object positioning rules may comprise a rule favouring layout configurations having at least one tower unit, optionally favouring layout configurations having plural tower units. Additionally or alternatively, the object positioning rules may comprise a rule favouring layout configurations including an island comprising island units, optionally favouring layout configurations in which the island is located at least 1m from any base unit, wall unit or tower unit (to allow walkway space around the island unit). Additionally or alternatively, the object positioning rules may comprise a rule favouring layout configurations in which higher proportions of the included wall units (ideally, all of the wall units) are located above base units.

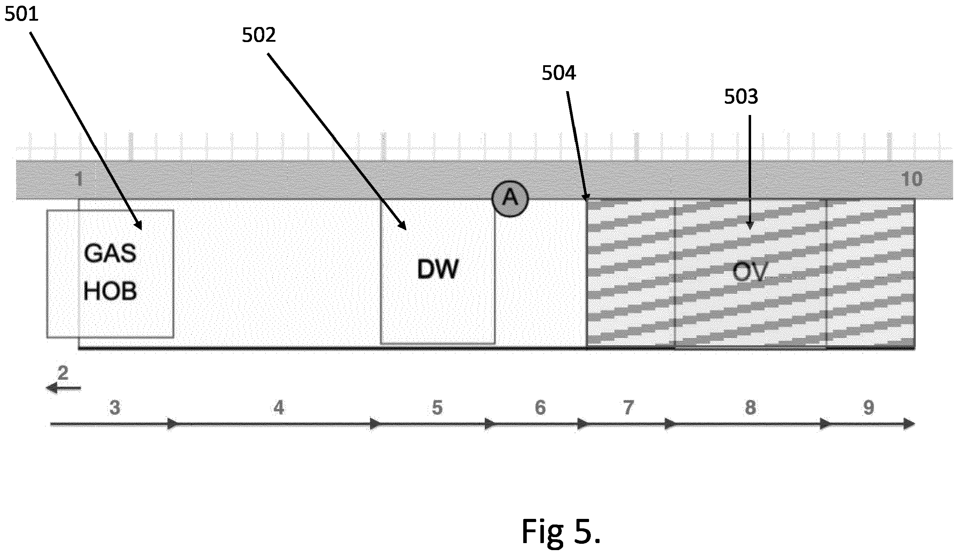

An example of the positioning of plural regular objects is shown in **Figure 5**. Figure 5 is a plan view of a part of a layout configuration that is part way though generation. Three key objects are shown in Figure 5: a gas powered hob unit 501, dishwasher 502 and oven 503. The key objects have been automatically positioned and configured. The regular objects to be positioned in Figure 5 are a plurality of base units and a plurality of tower units; point 504 indicates the approximate division point between the tower units surrounding the oven 503 and the base units surrounding the dishwasher 502 and gas hob 501. In the context of kitchen layout configuration, a plurality of base units (wherein each of the base units is adjacent to at least one further base unit of the plurality of base units) may be referred to as a run of base units; the same is true of tower units and wall units.

A series of numbers are included on Figure 5 indicating various width ranges. Numbers 1 and 10 indicate the approximate start and end points of the area to be occupied by regular objects; in this example, runs of base units and tower units. This approximate positioning may be determined automatically based on the type of the layout configuration, room dimensions, and so on. Using the positions of the key objects and the approximate start and end points (numbers 1 and 10), the base units and tower units may be positioned. As mentioned above, the regular object positioning rules may receive as inputs the potential dimensions of regular objects (base units, wall units and/or tower units in the context of a kitchen) to use in the positioning. In the example shown in Figure 5, the range of potential dimensions of base units and tower units is used in the regular object positioning. The result of the positioning is the sizes indicate by widths 2 to 9 on Figure 5. Width 2 indicates that the base unit run is extended such that the gas hob key object is not overhanging the end of the run; this may be referred to as a negative width as it results in a net increase in the total remaining width of the run, unlike all of widths 3 to 9 which are positive widths. As an alternative solution to extending a run of units when a key object (such as a gas hob) overhangs the end of the run as discussed above, the key object itself may be moved within the run, as discussed below. Width 3 indicates the width of an object located beneath the gas hob; this may be considered a key object and treated as part of the gas hob key object, or may be considered separately. Width 5 indicates the width of the dishwasher key object, and width 8 indicates the width of the oven key object. Widths 4, 6, 7 and 9 indicate the positions for regular units, specifically: 4 and 6 are the positions for base units; and 7 and 9 are the positions for tower units. As shown in Figure 5 the approximate division point 504 indicated in the approximate positioning will be shifted to take into account the available unit widths.

An example of the regular unit positioning rules which may be used to generate regular object positioning as shown in Figure 5 (where the layout configuration is for a kitchen) is detailed below:
1. Run combination - Adjacent runs of regular units (base, tower, and so on) are combined.
2. Run segmentation - Combined layout runs are converted to sequences of run segments which describe the position and potential dimension options of units of the run. The start and end points of a layout run are represented by run segments of zero length. All other run segments are constrained to being positioned between these two segments.
3. Compute preferred sizes of run segments - To minimise the impact of negative widths (such as that indicated by width 2 in Figure 5; said alterations may result from a need to extend a run to ensure a key object does not overhang the end of the run, for example), a sum (S) of the negative widths is calculated. The preferred widths for the negative widths are then set to zero, and the preferred sizes for the remaining run segments are set to their initial size plus some portion of S. Typically S is dispersed equally across the run segments, however this is not necessarily the case and in a single segment may be extended to encompass negative width 2.
4. Compute potential dimension options for the run segments - The potential dimension options describe the units that could collectively be used in a run segment. By way of example, a run segment could potentially be occupied by a single wide base unit or two narrower base units of cumulative equivalent width.
5. Select combination of potential dimensions options for run - A combination of potential unit dimensions that will collectively fill the run segment, while minimising the amount of wasted space and maximising unit capacity. In some situations it may be necessary to modify key object positioning, the gas hob in the example considered above may be moved to not overlap the end of the run for example, although this is avoided where possible. Where it is not possible to avoid altering key object positioning, the key object positioning is altered and any corresponding key object configuration alterations are made, and then the regular object positioning is modified if necessary using the revised key object positioning. An example of a sub process which may be used to select a combination of potential dimension options is:.
   5.1. Compute combinations *C* of potential dimension options from step 4 as discussed above.
   5.2. Let valid combinations (not clashing with a key object position or wall, for example) be *V.*
   5.3. For each combination *c* in *C*:
      5.3.1. For each pair of base objects in c, determine if a decor panel is required
   5.4. If combination size can fit in the remaining space in the run, add c to V.
   5.5. Choose c in V such that total shift of run segments is minimised and key object shift is also minimised.
6. Plan run by selected combination - The specific unit dimensions for a run are selected, taking into account any units that may have different width options.

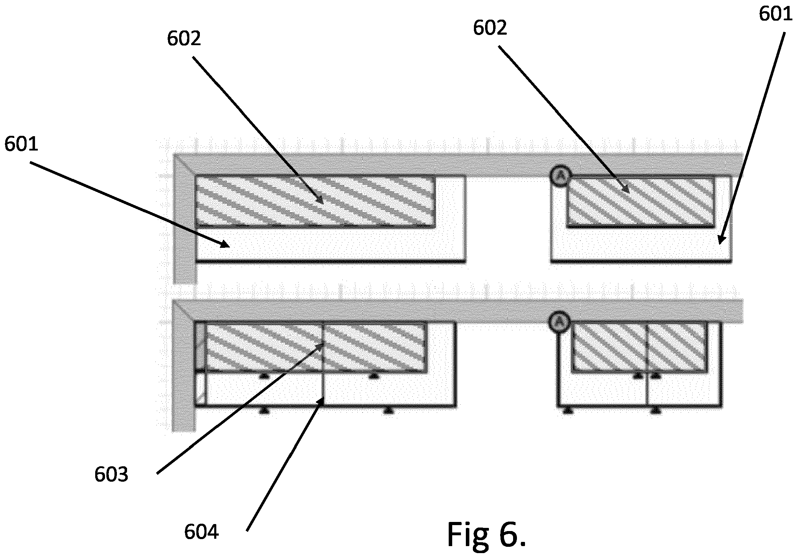

The result of the regular unit positioning rules is that all of the regular objects in a given run have been positioned. The process is then repeated for any other base unit runs, tower unit runs or island unit runs to populate the layout configuration with positioned regular units. In some embodiments for generating kitchen layout configurations, the positioning of wall units may be performed after base unit positioning has been completed; this is because wall units may be configured such that they are aligned with base units they are located above. An example of this is shown in **Figure 6**. In Figure 6, the top half of the figure shows approximate layouts of base units 601 and wall units 602. The bottom half of the figure shows how, once the base units and wall units have been positioned, the edges 603 of doors in the wall units (that is, at the edge of the units or between paired doors where a wall unit has plural doors) have been aligned with the edges 604 of the doors of the corresponding base units.

As shown in step S1024 of Figure 1, regular object configuration is then performed. The regular object configuration may utilise the regular object positioning and layout information, and may also use the positioning and configuration of key objects in some embodiments. By way of example, where a corner unit (an example of a key object) that abuts a regular object has been configured, the corner unit configuration may be taken into consideration when configuring the regular objects. Similarly to the configuration of the key objects, the configuration of the regular objects may comprise selecting between different models of a type of unit, for example, selecting a base unit model, wall unit model or tower unit model. Information such as opening directions of doors, symmetrical arrangements of regular objects where plural regular objects are configured, and so on may also be taken into consideration. Regular object configuration rules may be used to configure the regular objects; an example of such rules as may be applied to regular objects positioned is shown below.
1. Configure any unconfigured regular objects that support two-door configurations as two-door units (this determination may be made based on the width of the object, for example, objects with a width of 601mm or greater may be configurable as two-door units).
2. For remaining unconfigured regular objects:
   2.1. If there are an odd number of adjacent unconfigured regular objects, the endregular objects closest to the wall is configured as a one-door unit with door hinge towards the wall.
   2.2. Remaining regular objects are configured pairwise, such that for each pair the left-hand regular objects is configured with a left-hinge single-door unit and the righthand regular objects is configured with a right-hinge single-door unit.

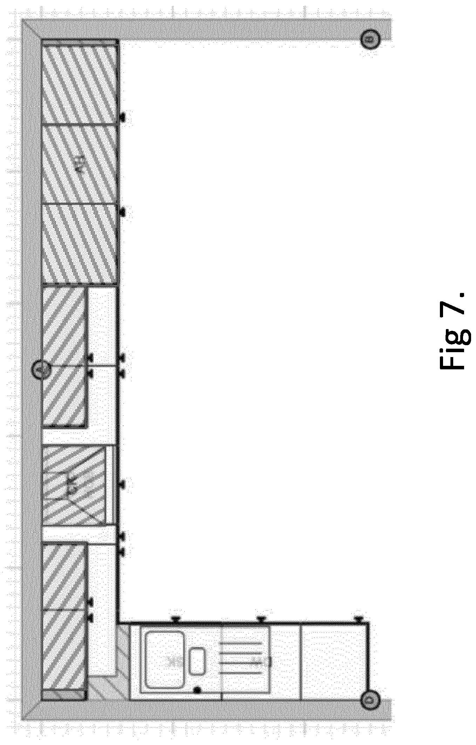

In this way, the configuration of the regular units may be completed. An example layout configuration, in accordance with embodiments, is shown in **Figure 7**. In Figure 7, the layout configuration relates to a kitchen (that is, the space is a kitchen). The layout configuration in this example includes positions of key objects and regular objects, and all of the objects have also been configured. As can be seen with reference to Figure 3B, the layout configuration shown in Figure 7 is of the type U shaped configuration.

In some embodiments, additional configuration steps may be performed following the configuration of key units and regular units. The additional configuration steps may include, for example, configuring lighting and/or flooring material for a room (such as an office or kitchen). Continuing with the example in which the layout configuration is for a kitchen, following the configuration of the regular units (and key units) worksurfaces may be configured using the key object configuration and regular object configuration. Where worksurfaces are to be configured, a general aim may be to position worksurfaces on top of base units in such a way as to avoid wastage of worksurface material, while creating an aesthetically pleasing worksurface layout (as determined using preset rules for generating aesthetically pleasing layouts) and maintaining compliance with construction requirements.

In an initial step of a worksurface configuration process, the configurations of key units and regular units may be retrieved, and the units may be grouped according to height. Grouping by height may be useful as, typically, a single piece of worksurface material (that is, marble, stone, wood, and so on) is planar and therefore cannot easily be positioned on top of multiple units having different heights. In addition to restricting unit grouping according to the unit heights, the units may additionally be grouped so that only units that are proximate to one another (typically adjacent units and/or units forming part of the same run of units) fall within the same group.

In some embodiments, additional information such as layout information may also be used in the configuration. The layout information may be of use, for example, where a unit that is to have a worksurface positioned on top of it is proximate to but not in contact with a wall. In this situation, a worksurface may be extended beyond the edge of the unit such that, when installed, the worksurface is in contact with the wall and small gaps between worksurface edges and walls are avoided. Avoiding small gaps in this way may result in a more practical and/or aesthetically pleasing layout. The additional information may also specify any further requirements for the worksurface not resulting from the unit configurations, for example: if it is desired to include an extension of the worksurface at the end of a run to provide a dining counter area; and/or if it is desired to provide an overhang of a given width relative to the front surface of units located below the worksurface (in some embodiments, the overhang depth may be determined by the type of unit located below the worksurface piece; alternatively an overhang that is independent of the unit type may be used). Where it is desired to extend a worksurface as discussed above, additional modifications to the layout (such as supports or legs) may be required if the extension results in an unsupported section of worksurface having dimensions above a predefined limit (said limit may be material specific, for example). The additional modifications may be automatically implemented, or a warning may be displayed to a user indicating that supports or legs are required to be added to the layout.

In the configuration of worksurfaces, a consideration may be the location of connections between different pieces of worksurface material. Various factors may be taken into consideration when considering where best to locate a join between pieces of material, including: the maximum available dimensions of worksurface material pieces; locations of units (typically key units such as hob units or sink units) which a join between pieces of worksurface material should not be located over or within a certain distance of for safety or aesthetic reasons; locations of base corner units; locations of small gaps between units; any variations in the width of a planned worksurface; properties of the worksurface material (such as weight and structural rigidity) and so on. The factors may be divided into hard restrictions and soft restrictions, wherein the hard restrictions are necessarily adhered to and the soft restrictions are preferably but not necessarily adhered to By way of example, avoiding joins between worksurfaces over units where such a join would present a safety concern may be an example of a hard restriction, while varying the positioning or use of decor units connected to some units (such as sink and hob units) to alter the length of a worksurface may be an example of a soft restriction.

Once the key unit and regular unit configuration information, and any additional information to be used, has been obtained, the worksurface configuration process may then continue with the generation of potential worksurface layout. In a first step of the generation process, a number of potential worksurface layouts may be generated. The potential worksurface layouts may be generated in compliance with the hard restrictions (for example, no join between worksurface pieces over or within a certain distance of a hob unit), where this information is available. The generated potential worksurface layouts may then be evaluated to find a preferred layout. The evaluation may take into account the compliance of the potential worksurface layouts with the soft restrictions, with preference given to potential worksurface layouts that: require the smallest number of soft restriction violations (ideally no soft restriction violations); minimise the number of separate sections of worksurface material required; contain the smallest variation between the largest length and smallest length of worksurface piece required; if applicable; allow offcuts from worksurface sections to be used to form other worksurface sections; and so on. In some embodiments, sections of worksurface material may be available in a standard length; in these embodiments the use of offcuts as referred to above may be a relevant consideration when determining a preferred layout.

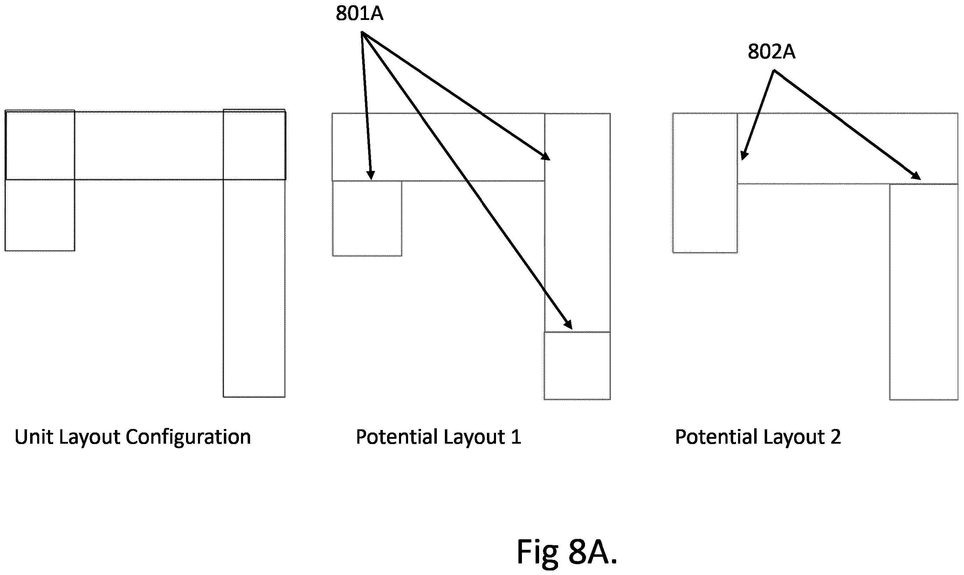

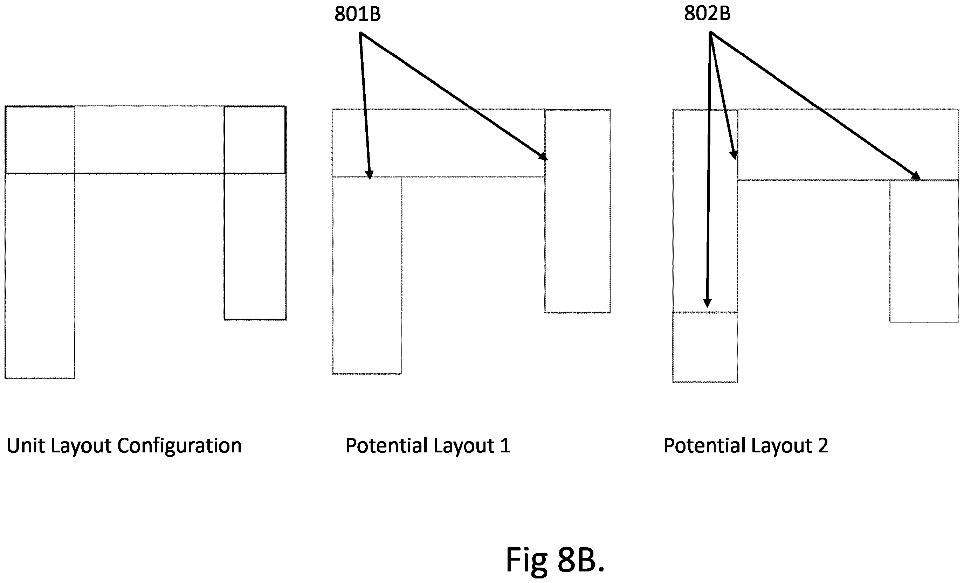

**Figure 8A** and **Figure 8B** show examples of how a preferred worksurface layout may be selected from among a plurality of potential worksurface layouts. As indicated by the labels on the figures, both figures show a unit layout configuration including an arrangement of regular units and key units (in the Figure 8 examples, all of the units are to have worksurfaces located on top of them). Both Figure 8A and Figure 8B also shown two potential worksurface layouts, labelled as potential layout 1 and potential layout 2. The joints between worksurface sections in Figure 8A layout 1 are labelled 801A, and the joints between worksurface sections in Figure 8A layout 2 are labelled 802A. Similarly, the joints between worksurface sections in Figure 8B layout 1 are labelled 801B, and the joints between worksurface sections in Figure 8B layout 2 are labelled 802B.

All of the potential layouts shown in Figure 8 comply with hard restrictions. In Figure 8A, potential layout 1 requires a larger number of worksurface pieces than potential layout 2 and also has a greater variation between the largest piece of worksurface length and smallest piece of worksurface length required; accordingly, potential layout 2 may be selected as the preferred worksurface layout following evaluation. In Figure 8B, potential layout 1 requires a smaller number of worksurface pieces than potential layout 2 and also has a smaller variation between the largest piece of worksurface length and smallest piece of worksurface length required; accordingly, potential layout 1 may be selected as the preferred worksurface layout following evaluation.

When a preferred worksurface layout has been selected, the preferred worksurface layout may then be added to the layout configuration.

As discussed above, step S1020 may be used to generate a plurality of layout configurations. Following the generation of the plurality of layout configurations, one or more of the layout configurations may then be selected as shown in step S1030 of Figure 1. The selection of one or more layout configurations to be outputted may be made based entirely on layout scores of the generated plurality of layout configurations, in embodiments where layout scores are available. Where layout scores are not available, other means may be used to select layout configurations to be outputted, for example, random selection or outputting of all generated layout configurations. In some embodiments layout scores may be used to select a plurality of layouts to be outputted to a display (for example, a standard computer display, Augmented Reality (AR) or Virtual Reality (VR) headset display, and so on), and then a final selection from among the plurality of displayed layout configurations may be made utilising human selection. In some embodiments the selection process may also include initial human guidance, for example, human selection of one or more layout configuration types to be automatically selected, display of a plurality of layout configurations of the selected type(s), and then a final human selection from among the displayed layout configurations. By way of example, (wherein the space is a kitchen, a selection may be made such that only U shaped layout configurations are to be automatically selected, a number of U shaped layout configurations may then be automatically selected and displayed, and a human may then select from among the displayed U shaped layout configurations. The selected layout may also be further modified, based on human selection, before outputting. The selection of one or more of the plurality of layout configurations may be made, for example, by the processor 21 of layout configuration apparatus 20A running a program stored on the memory 23 and utilising the interfaces 22 (which may include one or more user interfaces and/or interfaces with storage media), or may be performed by the selector 26 of layout configuration apparatus 20B.

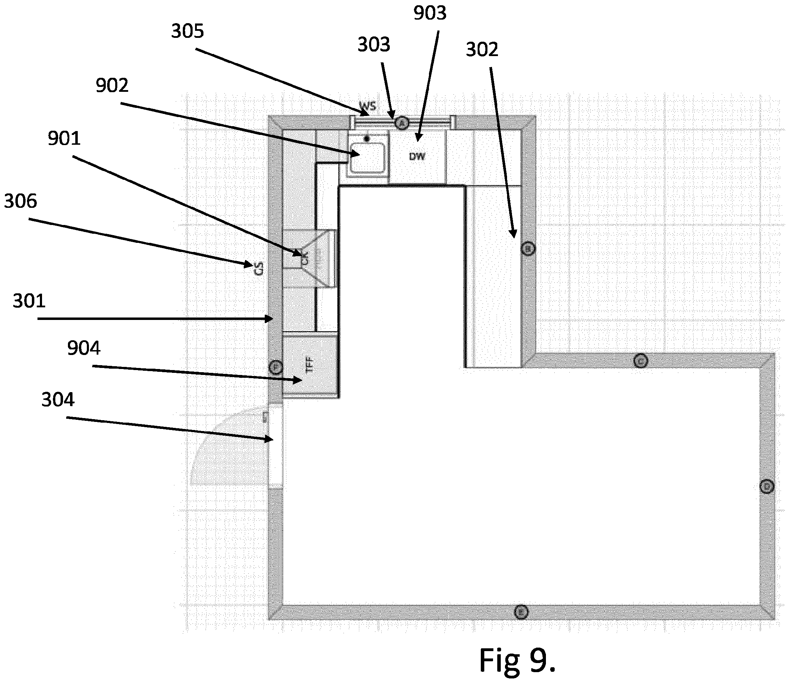

Finally, as shown in step S1040 of Figure 1, the selected layout configuration (potentially including the worksurface layout as discussed above) is outputted. In some embodiments the layout configuration may be outputted to a display unit for viewing; **Figure 9** shows an example of an output layout configuration for the space (in this example, kitchen) of Figure 3A. As can be seen in Figure 9, key objects have been located according to layout configuration rules. By way of example: a cooker (CK) 901 is located proximate to the gas supply 306, a sink 902 is located proximate to the water supply 305, a dishwasher (DW) 903 is located adjacent to the sink, a refrigerator (TFF) 904 is located in a tower unit, the positioning of wall units avoids the restricted height portion of ceiling 302, and so on. The Figure 9 layout configuration is a U shape type layout configuration. In addition or alternatively to being output as a plan view schematic (of the type shown in Figure 9), the selected layout configuration or layout configurations may be output for display using AR and/or VR technology.

In some embodiments the layout configuration may, additionally or alternatively to being output to a display as discussed above, be outputted to an assembly facility; where this is the case the method may further comprise assembling materials to fabricate the configured layout. Continuing with the example in which the layout configuration relates to a kitchen, the layout configuration may be sent to an assembly facility including material preparation facilities such that doors, worksurfaces and so on of suitable dimensions may be prepared. The preparation of some or all of the materials may be partially or wholly automated, that is, instructions may be received by Computer Aided Manufacturing (CAM) machinery that may prepare materials without substantial human input or with significantly reduced human input. By way of example, the layout configuration may be sent to an automated production line including cutting machinery and used to prepare wood or stone (for example, granite or marble) sections of the correct dimensions for assembling the configured layout. Additionally or alternatively, the layout configuration may comprise a list of materials to be assembled for installation (such as door knobs, feet for units, and so on); this list may be automatically sent to a suitable electronic device of a human worker to aid in an aggregation process, or an automated collection unit may be used to aggregate the materials. The prepared materials (that is: prepared materials, aggregated materials, or both) may then be taken for installation, substantially reducing the amount of human input required.

By automating aspects of layout configuration processes, embodiments may reduce the amount of user input required to complete a layout configuration, thereby improving the speed with which the process may be completed and providing relief to users from a potentially arduous task. Further, embodiments may take into consideration manufacturing processes when generating layout configurations, and accordingly the resulting layout configurations may be more resource efficient than those generated without automation.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the function of the program modules may be combined or distributed as desired in various embodiments. In addition, the function may be embodied in whole or in part in firmware or hardware equivalents such as integrated circuits, field programmable gate arrays (FPGA), and the like.

References in the present disclosure to "one embodiment", "an embodiment" and so on, indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular embodiments only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements.

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings. However, any and all modifications will still fall within the scope of the non-limiting and exemplary embodiments of this disclosure. For the avoidance of doubt, the scope of the disclosure is defined by the claims.

## Claims

1. A computer implemented layout configuration method, comprising:
obtaining layout information for a space;
generating a plurality of layout configurations, wherein the generation of the plurality of layout configurations comprises;
automatically determining key object positioning within the space,
automatically configuring key objects using layout information,
automatically determining regular object positioning using key object positioning and configuration and layout information, and
automatically configuring regular objects using layout information and regular object positioning;
selecting one or more of the plurality of layout configurations; and
outputting the selected one or more layout configurations.

2. The method of claim 1, wherein the step of obtaining layout information comprises obtaining geometry information for the space.

3. The method of claim 2, wherein the geometry information is obtained from an existing layout plan for the space, and the step of obtaining layout information comprises discarding existing object information from the existing layout plan, and/or wherein step of obtaining layout information comprises receiving geometry information input via an input device.

4. The method of any preceding claim, wherein the step of obtaining layout information comprises obtaining positioning information for existing key objects to be retained, and the step of generating a plurality of layout configurations comprises positioning the existing key objects within the space using the obtained positioning information for existing key objects.

5. The method of any preceding claim, further comprising determining layout scores for layout configurations among the plurality of layout configurations, wherein the selection of one or more of the plurality of layout configurations is based on the determined layout scores.

6. The method of claim 5, wherein the layout scores for the layout configurations among the plurality of layout configurations are determined based on the relative similarity of the layout configurations to one another.

7. The method of claim 6, wherein more than one of the plurality of layout configurations are selected, and layout configurations that are dissimilar to one another are favoured in the layout scoring, optionally wherein layout configurations that are of different types to one another are favoured in the layout scoring.

8. The method of any of claims 5 to 7, wherein the steps of determining key object positioning and determining regular object positioning comprise applying a plurality of object positioning rules, optionally wherein the object positioning rules are further used to determine the layout scores for the layout configurations among the plurality of layout configurations.

9. The method of claim 8, wherein:
the space is a kitchen;
the key objects comprise at least one of a cooker, a dishwasher, a refrigerator, a hob unit, a sink and a corner unit, optionally wherein layout configurations including larger varieties of key objects are favoured in the layout scoring; and
the regular objects comprise at least one of a base unit, a wall unit, a tower unit and an island unit, optionally wherein layout configurations including larger varieties of regular objects are favoured in the layout scoring.

10. The method of claim 9, wherein:
the object positioning rules receive as inputs a location of a service connection point in the kitchen, and/or exclusion zone parameters for the appliance; and/or
the object positioning rules receive as inputs a range of potential dimensions of base units, wall units and/or tower units.

11. The method of any of claims 9 and 10, wherein the object positioning rules further comprise at one or more of:
a rule favouring layout configurations having at least one tower unit;
a rule favouring layout configurations including an island comprising island units, optionally favouring layout configurations in which the island is located at least 1m from any base unit, wall unit or tower unit; and
a rule favouring layout configurations in which any wall units are positioned above base units.

12. The method of any of claims 9 to 11, wherein the object positioning rules further comprise a rule favouring layout configurations including at least one sink, and optionally comprise one or more of:
a rule favouring layout configurations having a sink positioned adjacent to a water supply;
a rule favouring layout configurations having a sink positioned proximate to a window;
a rule favouring layout configurations having a sink positioned proximate to a drainage point;
a rule favouring layout configurations having a sink positioned in a base unit adjacent to at least two further base units; and
a rule favouring layout configurations having a sink positioned in an island.

13. The method of any of claims 9 to 12, wherein the object positioning rules further comprise a rule favouring layout configurations including at least one cooker, and optionally comprise one or more of:
a rule favouring layout configurations having a cooker positioned adjacent to a gas supply;
a rule favouring layout configurations having a cooker positioned equidistant to two windows;
a rule favouring layout configurations having a cooker positioned in a base unit adjacent to at least two further base units; and
a rule favouring layout configurations having a cooker positioned in an island;

14. The method of any of claims 9 to 13, wherein the object positioning rules further comprise a rule favouring layout configurations including at least one dishwasher, and optionally comprise one or more of:
a rule favouring layout configurations having a dishwasher positioned adjacent to a sink; and
a rule favouring layout configurations having a dishwasher positioned in a large base unit.

15. The method of any of claims 9 to 14, wherein the object positioning rules further comprise a rule favouring layout configurations including at least one refrigerator, and optionally comprise a rule favouring layout configurations having a refrigerator positioned in a tower unit.

16. The method of any of claims 5 to 15, wherein more than one of the layout configurations is outputted, the selection of layout configurations to be outputted being based on the layout scores.

17. The method of any preceding claim wherein the layout configuration is outputted to an assembly facility, and wherein the method also comprises assembling materials to fabricate the configured layout.

18. A layout configuration apparatus, comprising processing circuitry and a memory containing instructions executable by the processing circuitry, whereby the layout configuration apparatus is configured to:
obtain layout information for a space;
generate a plurality of layout configurations, wherein the generation of the plurality of layout configurations comprises:
automatically determining key object positioning within the space,
automatically configuring key objects using layout information,
automatically determining regular object positioning using key object positioning and configuration and layout information,
automatically configuring regular objects using layout information and regular object positioning, and
select one or more of the plurality of layout configurations; and
output the selected one or more layout configurations.
